# EUROPÄISCHE PATENTSCHRIFT

(11) **EP 0 324 355 B1**
(45) Veröffentlichungstag und Bekanntmachung des Hinweises auf die Patenterteilung: **04.08.1993**
(21) Anmeldenummer: 89100062.2
(22) Anmeldetag: 04.01.1989
(51) Int. Cl.: C08G 63/78

(54) **Verfahren zur Herstellung von aromatischen Polyestern**
Process for preparing aromatic polyesters
Procédé de préparation de polyesters aromatiques

(30) Priorität: 13.01.1988 DE 3800671
(43) Veröffentlichungstag der Anmeldung: 19.07.1989
(73) Patentinhaber: BAYER AG, 51368 Leverkusen (DE)
(72) Erfinder: Tacke, Peter, Dr., D-4150 Krefeld (DE); Grigo, Ulrich, Dr., D-4152 Kempen 3 (DE); Idel, Karsten-Josef, Dr., D-4150 Krefeld (DE)

(56) Entgegenhaltungen:
- AT-B- 1 292
- US-A- 4 127 560
- US-A- 4 330 668

## Beschreibung

Die Erfindung betrifft ein Verfahren zur Herstellung von aromatischen Polyestern auf Basis von Diphenolen und Iso- und/oder Terephthalsäure durch Umesterung von Estern des Bisphenols A mit den aromatischen Dicarbonsäuren in der Schmelze.

Die Herstellung von Polyarylaten durch Umesterung in der Schmelze nach dem Acetatverfahren bei Umsetzung von Bisphenol-Diacetaten mit Iso- und/oder Terephthalsäure ist bekannt. Die Reaktionsführung wird dabei in hohem Maße erschwert durch die Neigung der beiden aromatischen Dicarbonsäuren, besonders der Terephthalsäure, zur Sublimation. Das Sublimat ist nicht abschmelzbar und verstopft in kurzer Zeit die Zu- und Ableitungen der Reaktionsapparaturen. Außerdem erreicht man keine ausreichenden Molgewichte, weil eine schwer abzuschätzende Menge einer Reaktionskomponente aus dem Reaktionsgemisch verschwindet.

Zur Vermeidung bzw. Eindämmung der Sublimation ist beispielsweise im US-Patent 2 948 856 und in der europäischen Offenlegungsschrift 26 121 vorgeschlagen worden, ein inertes, hochsiedendes Lösungsmittel, z.B. Diphenylether, bei der Umesterung mitzuverwenden. Ein solches Lösungsmittel ist zwar sehr wirksam bei Zurückdrängung der Sublimation, es hat sich jedoch gezeigt, daß die vollständige Abtrennung dieser Lösungsmittel aus den Polyestern äußerst aufwendig und schwierig ist.

Es wurde nun ein Verfahren zur Herstellung von aromatischen Polyestern auf Basis von Bisphenol A 2,2-Bis-4-hydroxyphenylpropan und Iso- und/oder Terephthalsäure durch Umesterung von Estern des Bisphenols A mit den aromatischen Dicarbonsäuren in der Schmelze gefunden, das dadurch gekennzeichnet ist, daß die aromatischen Dicarbonsäuren zunächst mit einem 20 bis 60 Mol-%igem stöchiometrischen Überschuß des Bisphenol A-Esters zu Oligomeren umgesetzt und diese dann unter Abspaltung und Abdestillation von Diphenolester zu den aromatischen Polyestern kondensiert werden.

Zur Veresterung des Bisphenole sind Monocarbonsäuren, wie Essigsäure, Propionsäure oder Benzoesäure geeignet. Bevorzugt wird Essigsäure zur Veresterung der Bisphenole eingesetzt.

Die bevorzugt eingesetzten Bisphenol-Diacetate können auch durch Umsetzung der entsprechenden Bisphenole mit Acetanhydrid hergestellt werden, wie beispielsweise in den europäischen Offenlegungsschriften 26 121, 26 684 und 28 030 beschrieben. Die Bisphenol-Diacetate können auch in Gegenwart der oben angeführten aromatischen Dicarbonsäuren hergestellt werden.

Die erfindungsgemäße Umesterung in der Schmelze wird vorzugsweise in Gegenwart von Katalysatoren durchgeführt, die in Mengen von bis zu 3 Gew.-%, bezogen auf die eingesetzten Diphenole, zugesetzt werden. Bevorzugt sind Mengen von 0,001 bis 1 Gew.-%, bezogen auf die eingesetzten Diphenole. Die Katalysatoren können bereits vor Beginn oder zu jedem beliebigen Zeitpunkt während der Esterherstellung zugegeben werden. Es ist auch möglich die Katalysatoren erst nach Beendigung der Esterherstellung dem Reaktionsgemisch zuzusetzen.

Als Katalysatoren für die Umesterung in der Schmelze kommen beispielsweise in Frage: Natriumhydroxid, Kaliumhydroxid, Zinkacetat, Magnesiumacetat, Tetraalkyltitanate, Dialkylstannate, Tetraalkylstannate, Arylstannate, gemischte Zinn-Ester-Salze, Phosphine und/oder thermisch stabile tertiäre Amine, wobei die Zinnverbindungen und Magnesiumacetat bevorzugt sind.

Das erfindungsgemäße Verfahren wird üblicherweise bei Temperaturen von ca. 180 bis 360° C, bevorzugt 200 bis 320° C, durchgeführt. Dabei werden die Ausgangskomponenten zunächst bei Temperaturen von ca. 180 bis 260° C, bevorzugt 200 bis 220° C, unter Schutzgasatmosphäre (z.B. Stickstoff) bei Normaldruck zu Oligomeren umgesetzt, die dann anschließend bei Temperaturen von etwa 250 bis 360° C, bevorzugt 270 bis 320° C, im Stickstoffstrom oder Vakuum (ca. 0,1 bis 100 mbar) zu den aromatischen Polyestern kondensiert werden.

Da die aromatischen Polyester hohe Schmelzviskositäten besitzen, ist ihre Herstellung in mit Rührern ausgestatteten Glaskolben oder Stahlkesseln schwierig. Deshalb werden in solchen Rührapparaturen vorzugsweise nur leicht rührbare Vorkondensate mit relativen Lösungsviskositäten von ca. 1,06 bis 1,18 (gemessen en einer Lösung von 0,5 g Ester in 100 ml Lösung bei 25° C; als Lösungsmittel dienen CH₂Cl₂ oder 1:1-Gemische aus Phenol und o-Dichlorbenzol) hergestellt. Die Weiterkondensation kann dann beispielsweise in der Schmelze in einem Vakuumextruder, bei Kleinstmengen im Labor im Glaskolben mit starkem Rührer erfolgen. Außerdem ist die Nachkondensation in der festen Phase möglich. Die fertigen aromatischen Polyester besitzen in der Regel relative Lösungsviskositäten von 1,2 bis 2,0, vorzugsweise 1,23 bis 1,5 (gemessen in den obengenannten Lösungsmitteln).

Die nach dem erfindungsgemäßen Verfahren hergestellten aromatischen Polyester können in üblichen Verarbeitungsmaschinen durch Extrusion zu Halbzeug und durch Spritzgießen zu Formteilen verarbeitet werden. Weiterhin können die aromatischen Polyester anderen Polymeren zugemischt werden zur Verbesserung von deren Eigenschaften.

### Beispiel 1

Herstellung eines Polyesters aus Bisphenol A und reiner Isophthalsäure
51,3 g (0,225 Mol) BPA
50,53 g (0,495 Mol) Acetanhydrid
50 mg Di-n-butyl-zinn-dilaurat
wurden in einen Dreihalskolben mit Rührer und Destillationsbrücke gefüllt und unter N₂ 30 Minuten unter Rückfluß erhitzt. Dabei destillierte die entstehende Essigsäure ab. Anschließend wurde das überschüssige Acetanhydrid bei 100 mbar und 130° C Sumpftemperatur abdestilliert.

Zu dem auf diese Weise erhaltenen BPA-Diacetat wurden 24,92 g (0,15 Mol) Isophthalsäure gegeben und unter N₂ bei 200° C und Normaldruck weitergerührt. Innerhalb 3 Stunden wurde die Temperatur auf 260° C angehoben. Die Schmelze wurde während dieser Zeit klar. Es ging Essigsäure über. Es sublimierten Spuren von farbloser Substanz in die Hälse des Kolbens.

Bei 3 mbar und 280° C Sumpftemperatur erfolgte dann die Destillation des BPA-Diacetates, das als farblose Substanz von Fp. 78° C überging. Nach 2 Stunden wurde die Destillation abgebrochen, weil die Schmelze zähflüssig geworden war, und von dem verwendeten Glasrührer nicht mehr bewegt werden konnte. Eine Sublimation war nicht festzustellen. Das Produkt (Vorkondensat) stellte nach dem Abkühlen eine gelbbraune spröde Substanz der relativen Lösungsviskosität ηrel = 1,168 dar (gemessen mit einer Lösung von 0,5 g Substanz in 100 ml Lösung). Als Lösungsmittel diente ein Gemisch aus je 50 Gew.-% Phenol und o-Dichlorbenzol.

20 g des Vorkondensates wurden in einem Glaskolben mit Stahlrührer bei 300° C und 2 mbar noch 2 Stunden weiterkondensiert. ηrel stieg dabei auf 1,295. Der erhaltene Polyester war nicht mehr spröde.

### Beispiel 2

Herstellung eines Polyesters aus Bisphenol A und einem Gemisch aus 70 % Tere- und 30 % Isophthalsäure
Nach Herstellung von BPA-Diacetat, wie in Beispiel 1 beschrieben, wurden 24,92 g eines Gemisches aus 70 % Terephthalsäure (17,44 g) und 30 Isophthalsäure (7,48 g) zugesetzt. Die Umsetzung erfolgte wie bei Beispiel 1 angegeben. Das Vorkondensat besaß ηrel 1,159, der fertige Polyester 1,291.

### Vergleichsversuch

Zum Vergleich mit Beispiel 2 wurde der Versuch wiederholt, jedoch von 34,24 g (0,15 Mol) BPA ausgegangen und mit 33,7 g Acetanhydrid umgesetzt. Die Mengen der eingesetzten Säuren entsprachen Beispiel 2. In diesem Falle wurden in den Kolbenhälsen 2, 47 g Sublimat festgestellt. Dieses war nicht schmelzbar. Die relative Lösungsviskosität (ηᵣₑₗ) des Produktes überschritt nicht den Wert von 1,213. Das Produkt war besonders dunkel gefärbt.

## Patentansprüche

1. Verfahren zur Herstellung von aromatischen Polyestern auf Basis von Bisphenol A und Iso- und/oder Terephthalsäure durch Umesterung von Estern des Bisphenols A mit den aromatischen Dicarbonsäuren in der Schmelze, dadurch gekennzeichnet, daß die aromatischen Dicarbonsäuren zunächst mit einem 20 bis 60 Mol-%igen stöchiometrischen Überschuß des anfangs eingesetzten Bisphenol A-Esters zu Oligomeren umgesetzt und diese dann unter Abspaltung und Abdestillation von Diphenolester zu den aromatischen Polyestern kondensiert werden.

2. Verfahren gemäß Anspruch 1, dadurch gekennzeichnet, daß Bisphenol-Diacetat als Ester eingesetzt wird.

## Claims

1. A process for the production of aromatic polyesters based on bisphenol A and isophthalic acid and/or terephthalic acid by transesterification of esters of the bisphenol A with the aromatic dicarboxylic acids in the melt, characterized in that the aromatic dicarboxylic acids are first reacted with a 20 to 60 mol-% stoichiometric excess of the bisphenol A ester initially used to form oligomers which are then condensed to the aromatic polyesters with elimination and removal by distillation of diphenol ester.

2. A process as claimed in claim 1, characterized in that bisphenol diacetate is used as the ester.

## Revendications

1. Procédé de préparation de polyesters aromatiques à base de bisphénol A et d'acide iso- et/ou téréphtalique par transestérification d'esters du bisphénol A et d'acides dicarboxyliques aromatiques en milieu fondu, caractérisé en ce que les acides dicarboxyliques aromatiques sont tout d'abord mis à réagir avec un excès stoechiométrique de 20 à 60 % molaire d'ester du bisphénol A pour donner des oligomères, et ceux-ci sont ensuite condensés en polyesters aromatiques avec séparation et distillation de l'ester de diphénol.

2. Procédé selon la revendication 1, caractérisé en ce qu'on utilise comme ester du diacétate de bisphénol.
